# EUROPEAN PATENT APPLICATION

(11) **EP 3 933 756 A1**
(43) Date of publication of application: **05.01.2022**
(21) Application number: 20183009.8
(22) Date of filing: 30.06.2020
(51) Int. Cl.: G06T 7/00, G06T 7/73, G06T 7/254, G06T 7/246

(54) **METHOD OF MONITORING A BUILDING ELEMENT, VISUAL FEATURE, CONNECTION ELEMENT, MONITORING SYSTEM, AND COMPUTER PROGRAM PRODUCT**

(71) Applicant: Hilti Aktiengesellschaft, 9494 Schaan (LI)
(72) Inventor: Pfarr, Lukas, 6800 Feldkirch (AT); Helmberger, Michael, 6800 Feldkirch (AT); Schmidt, Peer, 88131 Lindau (DE); Le Maitre, Pierre, 69006 Lyon (FR)
(74) Representative: Hilti Aktiengesellschaft Corporate Intellectual Property

(57) **Abstract**

The invention concerns a method (100) of monitoring a building element (16). Using an image capturing device (12) and a computing device (14), the method (100) comprises the steps (100.a, 100.b, 100.d, 100.c, 100.d, 100.e) of attributing a visual feature (28, 30, 44, 46) to each one of a first and a second region (24, 26, 40, 42) of the building element (16); taking a first plurality of images of the visual features (28, 30, 44, 46) by the image capturing device (12) at a first point of time; taking a second plurality of images of the visual features (28, 30, 44, 46) by the image capturing device (12) at a second point of time; causing the computing device (14) to process the images of the first and the second plurality of images in order to derive at least one of the distances between the two visual features (28, 30, 44, 46) and the relative orientations of the two visual features (28, 30, 44, 46) within the first plurality of images and within the second plurality of images; and causing the computing device (14) to deduce a state of the building element (16) from at least one of the difference between the distances and the difference between the relative orientations. Furthermore, the invention concerns several devices. The method enables a robust and cost-efficient monitoring of building elements (16).

## Description

The present invention relates to a method of monitoring a building element. The present invention further relates to a visual feature, a connection element, a monitoring system and a computer program product.

Frequently, building elements are to be monitored for degradation, structural alterations or the like, in particular over long time spans or even over the entire lifetime of the building element.

Therefore, it is an object of the present invention to provide a robust and cost-efficient method of monitoring a building element as well as devices that enable a robust and cost-efficient monitoring.

This is achieved in a number of aspects of the present invention, in which a first aspect is a method of monitoring a building element, using an image capturing device and a computing device, the method comprising the steps of:
a. Attributing a visual feature to each one of a first and a second region of the building element;
b. Taking a first plurality of images of the visual features by the image capturing device at a first point of time;
c. Taking a second plurality of images of the visual features by the image capturing device at a second point of time;
d. Causing the computing device to process the images of the first and the second plurality of images in order to derive at least one of the distances between the two visual features and the relative orientations of the two visual features within the first plurality of images and within the second plurality of images;
e. Causing the computing device to deduce a state of the building element from at least one of the difference between the distances and the difference between the relative orientations.

Thus, a basic idea behind the invention is that degradation processes, structural alterations, loosening of fixtures, fasteners, etc. may result in changes of a distance and/or in changes of a relative orientation of the at least two regions of the building element relative to each other. By monitoring such changes in a robust way, one can draw conclusions on the status, in particular on alterations, of the building element. It is a further idea behind the invention that the use of, in particular salient, visual features enables a robust method of measurement of such changes of a distance and of a relative orientation. The robustness and the accuracy of the measurement may be further enhanced by taking a plurality of images, that is, by taking a series of images instead of taking only a single image, at or during a certain point of time. Moreover, the method permits to automatize hitherto purely manual steps of inspection, which enables a very cost-efficient monitoring of one or many building elements.

In this context, "point of time" may comprise a time span of finite duration, e. g. a time span of 0.3 to 10 seconds.

"Building element" may comprise any kind of construction element, such as a fastener, an anchor, a stud or a screw, a building block, a part of a building or a whole building, e. g. a skyscraper, a bridge, a tunnel or the like. It may comprise a single element or a plurality of elements. For example, an anchor fixed in a building block, in particular to be monitored for potential loosening, may constitute a building element in the sense of the present invention.

A region may correspond to a single point of the building element; in the alternative, it may also correspond to a region of finite size, in particular on the surface, of the building element.

The first and the second regions may be chosen arbitrarily at least to a large extent. Preferably, they may be chosen so as to be suitable to record a change of the building element. In particular, they may comprise or be close to a region of interest. For example, to monitor a building element for possible fissures, the first and the second regions may be chosen respectively defined as regions on the left- and the right-hand sides of an expected location of a fissure.

"Attributing" a visual feature according to step a may comprise selecting a visual feature from the first or the second region. For this, the building element may comprise, e. g., a pattern on its surface within the respective region. Additionally or as an alternative, "attributing" may comprise adding a visual feature, for example a marker, e. g. a fiducial, a tag or the like to the respective region. For this, the visual feature may be self-adhesive.

Generally speaking, the visual feature used with the method may be formed as a separate object and may be attached to the first or the second region in order to attribute the visual feature to the first or the second region. In the alternative, the visual feature may comprise one or more natural features of the first or the second region. The one or more natural features may be automatically detectable. It or they may also be uniquely identifiable. Hence, it or they may be adapted to identify or, preferably, uniquely identify the first or the second region or the region of interest. A natural feature may be a corner, an edge or a texture. The visual feature may be flat or at least essentially flat.

The visual feature may comprise an image patch comprising a feature point. The feature point may comprise a descriptor that allows a re-identification of the visual feature in different images.

The processing of the images according to step d may also comprise an at least 2x3-dimensional analysis. Preferably, for each one of the first and the second points of time a three-dimensional position value and/or a three-dimensional orientation value of the monitoring system in respect to a predefined coordinate system may be derived. In a particularly preferred embodiment of the invention, additionally, for each one of the visual features a three-dimensional position value and/or a three-dimensional orientation value of the respective visual feature in respect to the predefined coordinate system may be derived.

In order to deduce the state of the building element according to step d, the computing device may calculate at least a difference between the distances and/or a difference between the orientations. The state of the building element may then be defined or set depending on whether at least one of these differences exceeds a predefined threshold or not.

The computing device may further be adapted to trigger a predefined action, e. g. to trigger an alarm, depending on the state or on a change of the state of the building element.

The processing of images according to step d may be executed sequentially and/or partially. In particular, in a first partial step the images taken on or during the first point of time may be processed. Then, at a later point of time the images taken on or during the second point of time may be processed.

A plurality of second pluralities of images according to step c may be taken, particularly at different second points of time. Hence, the first plurality of images according to step b may serve as baseline information. Then, the one or more second pluralities of images may serve to monitor for changes at different second points of time, e. g. at later points of time during the remaining lifetime of the building element. This enables to collect a chronological history about the state of the building element.

A preferred embodiment of the invention is characterized in that a fiducial comprising a pattern is used as visual feature. The pattern may be asymmetric. It may comprise at least one high-contrast image. It may comprise infrared, visible and/or ultraviolet color; it may also comprise a reflective, in particular structured, surface.

Reliability of the visual feature used can be improved if the visual feature comprises redundant information. It may also comprise an error-correcting code. Redundant information and error-correcting codes permit a unique identification of the visual feature even if parts of the visual feature are occluded or corrupted.

The visual feature may be static or at least comprise a static optical feature. Additionally or alternatively, the visual feature may be dynamic. For example, the visual feature may change dynamically its appearance over time or if triggered by an event or a state of the visual feature or a component of the visual feature.

The visual feature may comprise a one-, a two- and/or a three-dimensional optical code. In particular, it may comprise a barcode, a QR code, an ArUco marker and/or a QR code.

The visual feature used may comprise at least one dimension of known size. Preferably, the sizes of at least two dimensions of the visual feature may be known by the monitoring system. Alternatively, the visual feature used may comprise an indicator, preferably an indicator recognizable or readable by the monitoring system, indicating at least one distance of known length. In particular, the indicator may be a scale or the like.Another preferred embodiment of the invention is characterized in that a visual feature comprising a sensor, preferably a sensor material, is used as visual feature. The sensor, in particular the sensor material, may be responsive to a sensed condition, in particular to tension, to temperature, to humidity, to abrasion and/or to oxidation. By using a visual feature comprising such a sensor, additional information about the building element may be gathered. For this purpose, preferably the sensor may change its size, color or, in general, its appearance, depending on the sensed condition. The visual feature may comprise a communication interface, preferably adapted to transmit an information about the sensed condition. The communication interface may be wireless.

The visual feature used with the method may also comprise an identifier, preferably a unique identifier. The visual feature may be premanufactured. It may be attached or formed, e. g. by printing or engraving, in particular laser-engraving, to the building element or a part of the building element during manufacturing.

The method may comprise a step of requesting information from the communication interface. If the sensor comprises a sensor material, in particular which is capable of indicating the sensed condition by its appearance, this step of requesting information may be reduced to further analyze at least one of the images taken during step b and/or during step c in regard to the appearance of the respective visual feature or sensor.

To facilitate the processing of images according to step d, in particular in order to facilitate a triangulation of the positions of the visual features or the fiducials independently from the position and/or the orientation of the image capturing device, the method may comprise a step of changing the position of the image capturing device while recording the first plurality of images and while recording the second plurality of images. Hence, it may include a movement of the image capturing device. Also, the orientation of the image capturing system may be changed while taking the first and/or the second plurality of images.

Preferably a portable monitoring system may be used as image capturing system.

In one embodiment of the invention, a vehicle may be used for transporting the image capturing device. For this, the image capturing device may be attached to the vehicle. The vehicle may be unmanned or manned. It may be an aerial vehicle, particularly, a drone.

In a preferred embodiment, the vehicle may be an autonomously moving, unmanned aerial vehicle (UAV).

If, for example one or more large buildings, for example several bridges, are to be monitored, for each of the buildings to be monitored, two or more visual features, may be added to first and second regions of the respective building. During a first point of time, first pluralities of images may be autonomously taken of the first and second regions by the autonomously moving UAV, which may preferably be equipped at least with the image capturing device. The UAV may move autonomously next to each of the first and second regions. Then, later on at several second points of time, the UAV, particularly the image capturing device, may take second pluralities of images of the first and second regions. The states of the buildings may be deduced by the computing device. Depending on the states actions may be taken.

In one embodiment of the invention the computing device used may comprise a distributed computing device, e. g. a computing cloud.

The precision of the measurements may be improved by a step of calibrating and/or recalibrating the image capturing system and/or the computing device. Preferably, a first calibration may take place before taking the first plurality of images. A further calibration or re-calibration may take place during or after taking the first and/or the second plurality of images.

The method may be applied to new builds as well as to existing structures.

If the method is applied for monitoring a connection element, e. g. a fastener, attached to a base material, the method may also be used to evaluate a free fastener length in air. By knowing the total length of the connection element, an embedment depth of the connection element can be calculated.

Furthermore, the method can be applied for monitoring relative displacements of other components, such as installation profiles, cable trays, piping systems, etc, attached to or at least close to the building element.

The method may also be applied to moving building elements or building elements that enter or move within an imaging region of the image capturing device. For this, at least the image capturing device is preferably held in a fixed position. An application may be, for example, a monitoring of a lift station, in particular an observation of dedicated elements of gondolas, pillars or the like.

Another aspect of the invention is a visual feature, characterized in that it is adapted to be used for the method according to the invention. The visual feature may comprise any of the features the previously mentioned in regard to a visual feature. In particular, the visual feature may comprise a fiducial, preferably with a visual pattern.

The visual feature may comprise an identifier. The, preferably unique, identifier allows to store each monitoring result, e. g. each plurality of second images taken or each state of the building element, into a database. So after several repetitions an overview on a monitoring history may be gathered. This may allow for further insights into the state of the building element and its future development.

The visual feature may also comprise a sensor. The sensor may have any of the features previously mentioned in regard to a sensor.

A further aspect of the invention is a connection element, e. g. a rock bolt, comprising a visual feature. The connection element may be or comprise a bolt, an anchor, a stud, a screw, a nut, a washer or the like. The visual feature may comprise any of the features previously mentioned in regard to a visual feature.

Thus, the connection element provides a visual feature to a building element the connection element is attached to. In particular, if the building element comprises at least two of the connection elements, the building element can be monitored by using the method according to the invention, wherein the attributing of a visual feature according to step a may be simplified to selecting the connection elements and, respectively, their visual features.

The connection elements itself may also be monitored for, e. g. loosening, as the method applied to the at least two connection elements enables a detection of a change of the relative orientation and/or of a change of the distance between the two connection elements.

In a preferred embodiment of the connection element, it comprises an identifier. The identifier may comprise a separate tag or one or more symbols and/or a one-, a two-, or a three-dimensional code.

The connection element may comprise a sensor, preferably a sensor material. The sensor may have any of the features previously mentioned in regard to a sensor.

A further aspect of the invention is a monitoring system, comprising at least an image capturing device and a computing device. It is adapted to be used for the method according to the invention.

In particular, its computing device may be configured to the processing of the images of the first and the second plurality of images according to step d. The computing device may also be configured to the deducing of the state of the building according to step e. The monitoring system may be configured to execute at least steps b to e of the method according to the invention.

The monitoring system may comprise more than one parts. For example, it may comprise a camera part including the image capturing device, and a computing part including the computing device. One or more of the parts or the monitoring system as a whole may be part of another system, for example of a portable computing system, a distributed or cloud computing system or the like. The portable computing system may be or at least comprise a smartphone, a tablet computer, a handheld computer or the like. The parts may be distanced from each other. They may be connectable and/or connected to each other by a connection. The connection may be, at least partly, wireless.

The control unit may include a central processing unit and/or a parallel computing unit, in particular a graphics processor or a vector computing unit.

In a particularly preferred embodiment of the monitoring system, it is arranged to take more than one image at a time. Particularly, it may take stereoscopic images. Hence, a preferred embodiment of the monitoring system is characterized in that its image capturing device comprises at least two image sensors spaced from each other.

The monitoring system may comprise at least one distance sensor, particularly a 3D-imaging sensor, a time-of-flight sensor, or a LIDAR (Light Detection and Ranging) sensor. The distance sensor may be a depth sensor. The monitoring system may be arranged to employ additional data gained by the at least one distance sensor to further augment the accuracy of and/or to replace at least one of the measurements. Moreover, using the distance sensor, in particular the depth sensor, permits to directly use the structure information from the sensor to obtain a displacement measurement.

The monitoring system may also comprise an inertial measurement unit (IMU). The IMU may assist in precisely locating the image capturing device.

The monitoring system may comprise a light source to, e. g., normalize at least one environmental condition while taking images. The brightness, the color, or, in general, a property of the light source may be adjustable or adjusted to the environmental condition. The light source may also emit radiation specifically adapted to at least one of the visual features of the building element to be monitored. For example, the light source may emit ultraviolet light, if the visual feature comprises an ultraviolet-colored pattern.

To achieve a high accuracy of the measurements, it is advisable to use an image capturing device with a high resolution, in particular with a high angular resolution.

The accuracy may also be improved by reducing the physical distance between the monitoring system, in particular its image capturing device, and the visual features of the building element.

Hence, the monitoring system may comprise at least one rod, which allows to approach the image capturing device to the visual features. The rod may comprise a contact tip. The contact tip may be distanced by a predefined distance from the image capturing device of the monitoring system. Thus, if contacting the building element with the contact tip while taking images of the visual features, a first distance between the image sensor and the building element is known, so less images need to be taken and/or the accuracy of the measurements may be improved further.

The length of the rod may be adjustable. Preferably, the rod may be telescopic.

In a preferred embodiment of the invention, the monitoring system may comprise a vehicle. In particular, the vehicle may be a land vehicle, a water vehicle or an aerial vehicle. The vehicle may be manned or unmanned. The vehicle may be autonomously moving. This permits a regular and very cost-efficient monitoring even of large and/or many building elements.

Hence, in a particularly preferred embodiment of the invention the vehicle is an autonomous, unmanned aerial vehicle, e. g. an autonomously flying drone. A monitoring system equipped with such a vehicle may monitor one or more building elements fully-automatically and without supervision.

Another aspect of the invention is a computer program product that it is adapted such that, if executed on a computing device, at least step d of the method according to the invention is executed. Preferably, the computer program product may be adapted such that also other steps of the method, in particular the deducing of a state according to step e, may be executed.

The computer program product may be stored in a readable storage device, e. g. a flash memory card, a random-access memory, or the like.

The invention will be described further, by way of example, with reference to the accompanying drawings which illustrate preferred embodiments thereof, it being understood that the following description is illustrative of and not limitative of the scope of the invention. The features shown there are not necessarily to be understood to scale and are presented in such a way that the special features of the invention are clearly visible. The various features may be realized individually or in combination in any desired way in variants of the invention.

**In the drawings:**
Figure 1 shows a monitoring system and a building element;
Figure 2 shows another monitoring system comprising a rod and another building element;
Figure 3 shows another monitoring system comprising an UAV and another building element, and
Figure 4 shows a flow chart of the method.

Same reference signs are used for functionally equivalent elements in all figures.

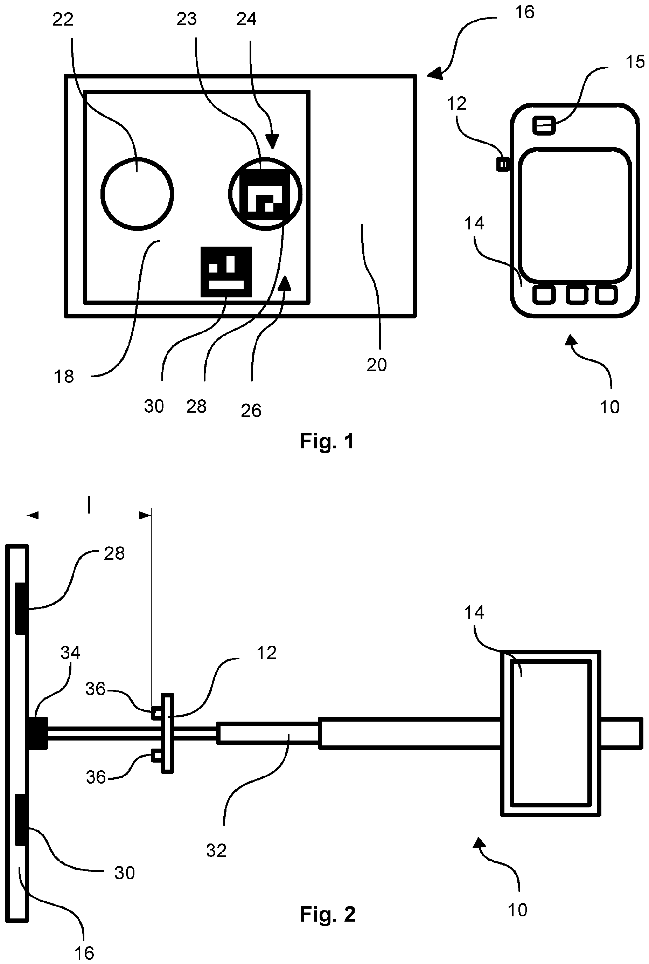

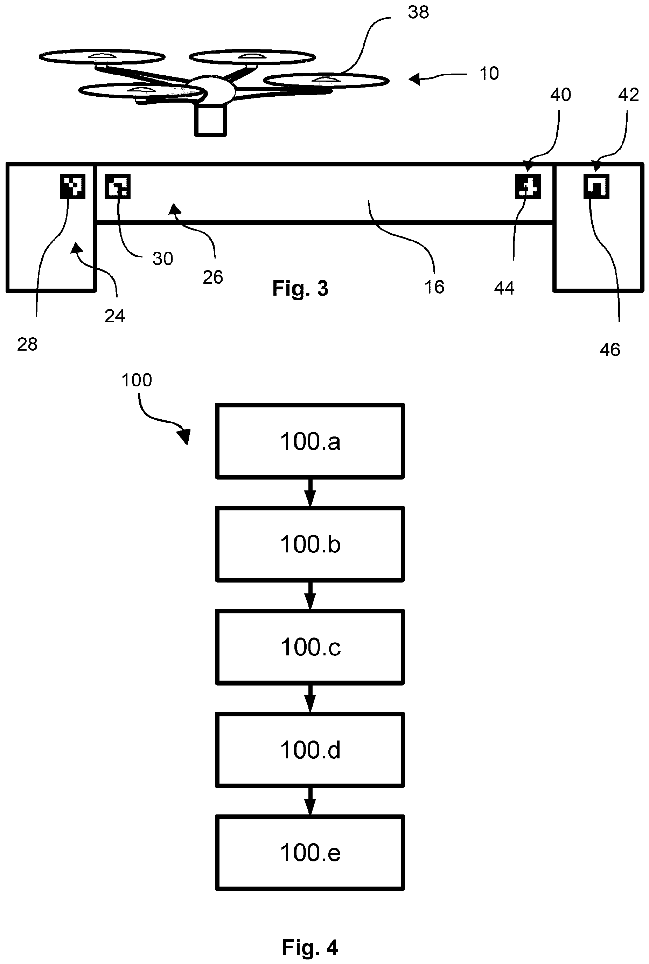

**Figure 1** schematically shows a monitoring system **10,** comprising an image capturing device **12** and a computing device **14.** The computing device 14 comprises at least a microprocessing unit, a graphics processor, a readable storage device, and a display. A computer program product **15** is stored in the readable storage device and can be executed on the microprocessor. If executed on the computing device 14, step b to step e of the method described further below in regard to Figure 4 will be executed.

The image capturing device 12 comprises an image sensor, for example a CCD or a CMOS image sensor. It is a part of the computing device 14. Therefore, the image capturing device 12, the computing device 14, and hence the monitoring system 10 form a single unit. The monitoring system 10 may be part of a portable computer, e. g. a tablet computer.

Figure 1 further schematically shows a building element **16.** It comprises a baseplate **18.** The baseplate 18 is mounted on an underground **20.** The underground 20 may be a part of a wall or the like. The baseplate 18 is fixedly connected to the underground 20 by two connection elements **22, 23.** The connection elements 22, 23 are anchors.

The building element 16 is to be monitored for alterations. In particular, any movement of the baseplate 18 relative to one of the connection elements 22, 23, for example to the connection element 23, is to be detected.

For this, the connection element 23 is defined as a first region **24.** The baseplate 18 is defined as a second region **26.**

To each one of the first and the second regions 24, 26, a visual feature **28, 30** is attributed. In particular, the connection element 23 and, hence, the first region 24, has been premanufactured of the visual feature 28. The visual feature 30 attributed to the baseplate 18 and, hence, to the second region 26, is glued onto the baseplate 18.

The visual features 28, 30 comprise visual patterns. In particular, they comprise different two-dimensional ArUco patterns.

**Figure 2** shows another monitoring system 10. Unless stated otherwise, it equals the previously described monitoring system 10.

As one of the differences to the foregoing embodiment, the monitoring system 10 comprises two separate parts. In particular, the image capturing device 12 is separated from the computing device 14. Both elements 12, 14 are connected electronically to each other, so that image data captured by the image capturing device 12 may be communicated to the computing device 14. Also, the computing device 14 is enabled to control the image capturing device 12.

Both parts are mounted on a rod **32.** The rod 32 is telescopic. At one end of the rod 32, it comprises a tip **34.** The image capturing device 12 is mounted on the rod 32 distanced by a distance I from the end of the rod 32 and, respectively, of an end of the tip 34.

In the situation shown in figure 2 the tip 34 contacts the building element 16. Two visual features 28, 30 are attached to, in particular screwed onto, the building element 16. Alternatively, it is also possible to have the visual features 28, 30 attached to the building element 16 by way of any other suitable fixing method, e. g. by direct fastening, glueing, printing, engraving, or the like.

The image capturing device 12 according to this embodiment of the invention is a stereoscopic image capturing device. To this end, it comprises two image sensors **36,** which are distanced from each other.

**Figure 3** shows another monitoring system 10. Unless stated otherwise, it also equals the previously described monitoring system 10 according to figure 1.

The monitoring system 10 is used for monitoring a building element 16, formed in this example as a bridge. The building element 16 is expected to get, for example, fissures or other alterations overtime. Pairs of first and second regions 24, 26 and, respectively, **40, 42** are defined as regions on the building element 16, wherein each one of the first regions 24, 40 is on a left-hand side and each one of the second regions 26, 42 is on a right-hand side of an area supposedly prone to such alterations.

Attached to the building element 16 and within each one of the first and second regions 24, 26, 40, 42 are two pairs of visual features 28, 30 and **44, 46.** Each one of the visual features 28, 30, 44, 46 is formed as self-adhesive sticker and comprises a unique pattern. The patterns are position markers and unique identifiers. All patterns of the visual features are two-dimensional ArUCo patterns.

As one of the differences, the monitoring system 10 according to this embodiment comprises an unmanned aerial vehicle, in particular a drone **38.** The drone 38 is adapted to move autonomously. In particular, it is adapted to sequentially fly to a series of positions close to the visual features.

By consecutively and, preferably, fully-autonomously flying from one pair of visual features to the other and applying the method according to the invention and described in more detail in regard to figure 4 the building element 16, i. e. the bridge, is monitored for alterations, e. g. fissures, by the monitoring system 10.

**Figure 4** schematically shows a flow chart of a method **100,** which will now be described in more detail. Wherever possible, reference is made to the reference signs used hitherto, in particular to the reference signs and the embodiment of the invention according to figure 3.

In order to execute the method, a monitoring system 10, in particular comprising an image capturing device 12 and a computing device 14, according to one of the previous embodiments of the invention may be used.

In a first step **100.a** the visual features 28, 30, 44, 46, are attributed to each one of first regions 24, 40 and to the second regions 26, 42 of the building element 16. For this, the visual features 28, 30, 44, 46 being self-adhesive stickers are sticked onto the building element 16 within the respective first and second regions 24, 26, 40, 42.

During a first flight of the drone 38 and according to a second step **100.b** of the method two first pluralities of images of the visual features 28, 30 and, respectively, of the visual features 44, 46 are taken by the image capturing device 12 at a first point of time. Each one of the first pluralities comprises several, for example 10, images. As the drone 38 flies along the building element 16, each one of these images is taken from another position of the monitoring system 10 and, in particular, of the image capturing device 12.

The first pluralities of images are then stored in a long-term storage; for example they may be uploaded to a cloud-based storage.

The following steps may be repeated, for example in regular time intervals, until the monitoring is to end or until an expected end of life of the building element 16:
During further flights of the drone 38 and according to a third step **100.c** of the method two second pluralities of images of the visual features 28, 30 and, respectively, of the visual features 40, 42 are taken by the image capturing device 12 at second points of time. Each one of the second pluralities also comprises several, for example 10, images. As the drone 38 flies along the building element 16, each one of these images is taken from another position of the monitoring system 10 and, in particular, of the image capturing device 12. Analogously to the first pluralities also the second pluralities of images are stored in the long-term storage.

The autonomous flights of the drone 38 may be controlled by the computing device 14. Additionally or as an alternative, they may also be controlled or supervised at distance by a separate computing device, e. g. a computing device being part of a cloud-based system.

In another subsequent step **100.d** the computer program product 15 causes the computing device 14 to process the images of the first and the second pluralities of images in order to derive at least one of the distances between the two pairs of visual features 28, 30 and, respectively, 44, 46 and the relative orientations of the two pairs of visual features 28, 30 and, respectively, 44, 46 within the first pluralities of images and within the second pluralities of images.

In a last step **100.e** within each repetition of steps the computer program product 15 causes the computing device 14 to deduce states of the building element 16 for each of the pairs of first and second regions 24, 26 and, respectively, 40, 42 from at least one of the differences between the distances and the differences between the relative orientations. Thus, each of these states represents a healthiness of the respective part of the building element 16 at the respective second point of time. An overall state is then defined as critical if at least one of the states is critical, otherwise the overall state is defined as uncritical.

By storing these states or the overall state to the long-term storage a chronological history of the healthiness of the building element 16 to be monitored is built up over time.

If the overall state is critical, the computing device 14 triggers a predefined action. For example, it may order fully-automatically a service team to examine and repair the building element 16.

In order to process the images of the first and the second pluralities of images according to step 100.d, at first, all visual features, in particular their fiducials or patterns, are detected within the respective images. Secondly, reference points, preferably center points, of the visual features are computed.

Secondly, in particular, in a setup with the image capturing device comprising only a single image sensor, an additional IMU sensor can be used to determine a scale of the coordinate system. In case of multiple image sensors a calibrated image capturing device can be used to determine the scale.

Thirdly, corresponding detected points in the images are used to establish 2D to 3D point correspondences. Using at least three 2D to 3D point correspondences, relative poses (orientations and translations) can be estimated using a perspective-n-point algorithm. This process is repeated for each image taken at one point of time. In a case where a natural feature is used, the 3D point data of the visual feature as well as the pose of the image capturing device are simultaneously estimated using a structure-from-motion (SfM)-algorithm or a simultaneous localization and mapping- (SLAM-) algorithm.

All detected visual features in the images with their corresponding 3D coordinate estimations and the poses of the image capturing device are jointly optimized in a bundle adjustment process. During this optimization process, also the intrinsic calibration parameters of the image capturing device can be refined.

Fourthly, after the optimization of the 3D coordinate estimations and the poses of the image capturing device, relative distances between two visual features are computed and used for further comparisons with relative distances at different points of time.

### Reference signs

- 10: monitoring system
- 12: image capturing device
- 14: computing device
- 15: computer program product
- 16: building element
- 18: baseplate
- 20: underground
- 22: connection element
- 23: connection element
- 24: first region
- 26: second region
- 28: visual feature
- 30: visual feature
- 32: rod
- 34: tip
- 36: image sensor
- 38: drone
- 40: first region
- 42: second region
- 44: visual feature
- 46: visual feature
- 100: method
- 100.a: step
- 100.b: step
- 100.c: step
- 100.d: step
- 100.e: step
- l: distance

## Claims

1. **A method** (100) of monitoring a building element (16), using an image capturing device (12) and a computing device (14), the method (100) comprising the steps (100.a, 100.b, 100.d, 100.c, 100.d, 100.e) of:
a. Attributing a visual feature (28, 30, 44, 46) to each one of a first and a second region (24, 26, 40, 42) of the building element (16);
b. Taking a first plurality of images of the visual features (28, 30, 44, 46) by the image capturing device (12) at a first point of time;
c. Taking a second plurality of images of the visual features (28, 30, 44, 46) by the image capturing device (12) at a second point of time;
d. Causing the computing device (14) to process the images of the first and the second plurality of images in order to derive at least one of the distances between the two visual features (28, 30, 44, 46) and the relative orientations of the two visual features (28, 30, 44, 46) within the first plurality of images and within the second plurality of images;
e. Causing the computing device (14) to deduce a state of the building element (16) from at least one of the difference between the distances and the difference between the relative orientations.

2. The method according to claim 1, **characterized in that** a fiducial comprising a visual pattern is used as visual feature (28, 30, 44, 46).

3. The method according to one of the preceding claims, **characterized in that** a visual feature (28, 30, 44, 46) comprising a sensor, preferably a sensor material, is used as visual feature (28, 30, 44, 46).

4. The method according to one of the preceding claims, comprising a step of changing the position of the image capturing device (12) while recording the first plurality of images and while recording the second plurality of images.

5. The method according to one of the preceding claims, **characterized in that** a vehicle is used for transporting the image capturing device 12.

6. **A visual feature** (28, 30, 44, 46), **characterized in that** it is adapted to be used for the method (100) according to one of the preceding claims.

7. **A connection element** (22, 23), e. g. a rock bolt, comprising a visual feature (28, 30, 44, 46).

8. The connection element according to the preceding claim, **characterized in that** it comprises at least one of an identifier and a sensor, preferably a sensor material.

9. **A monitoring system** (10), comprising at least an image capturing device (12) and a computing device (14), **characterized in that** it is adapted to be used for the method (100) according to one of the claims 1 to 5.

10. The monitoring system (10) according to the preceding claim, **characterized in that** the image capturing device (12) comprises at least two image sensors (36) spaced apart from each other.

11. The monitoring system according to one of the claims 9 to 10, comprising a distance sensor, particularly at least one of a 3D-image capturing sensor, a time-of-flight sensor, and a LIDAR sensor.

12. The monitoring system according to one of the preceding claims 9 to 11, **characterized in that** it comprises a rod (32).

13. The monitoring system according to the preceding claim, **characterized in that** the length of the rod (32) is adjustable.

14. The monitoring system according to one of the preceding claims 9 to 13, **characterized in that** it comprises a vehicle.

15. **A computer program product (15), characterized in that** it is adapted such that, if executed on a computing device (14), at least step d of the method (100) according to one of the claims 1 to 5 is executed.
